# FASCICULE DE BREVET EUROPEEN

(11) **EP 1 619 116 B1**
(45) Date de publication et mention de la délivrance du brevet: **21.02.2007**
(21) Numéro de dépôt: 05106660.3
(22) Date de dépôt: 20.07.2005
(51) Int. Cl.: B64C 3/26

(54) **Dispositif d'éclissage d'éléments de structure composite avec des éléments de structure métallique**
Laschenverbandvorrichtung zwischen komposite und metallischen Strukturelementen
Fish-plating device between composite and metallic structural members

(30) Priorité: 22.07.2004 FR 0451614
(43) Date de publication de la demande: 25.01.2006
(73) Titulaire: AIRBUS France, 31060 Toulouse (FR)
(72) Inventeur: Durand, Jean-Marc, 31530 Levignac sur Save (FR); Sarpy, Bruno, 31150 Fenouillet (FR); Bazerque, Gilles, 31130 Quint-Fonsegrives (FR)
(74) Mandataire: Schmit, Christian Norbert Marie

(56) Documents cités:
- US-A1- 2002 078 545

## Description

La présente invention concerne un dispositif d'éclissage d'éléments de structure composite avec des éléments de structure métallique et propose un dispositif notamment applicable à la réalisation d'une jonction mixte matériaux composite/métallique entre la voilure et le caisson central d'un aéronef.

Le raccordement des éléments de voilure métallique sur le caisson central métallique du fuselage d'un aéronef fait appel traditionnellement à des éléments de jonction en croix ou en T pourvus de branches longitudinales, boulonnées sur des panneaux en vis à vis de la voilure et du caisson central, pourvus d'une branche inférieure, sur laquelle est boulonnée une nervure, et, pour les éléments en croix d'une branche supérieure sur laquelle est boulonné un panneau supérieur du fuselage.

La branche inférieure reçoit une nervure du caisson central sur laquelle se reprennent des ferrures de compression longitudinales en appui en vis à vis sur la nervure, chacune des ferrures étant boulonnée sous un raidisseur.

Un tel raccordement est connu de US 2002/0078545, qui montre toutes les caractéristiques du préambule de la revendication indépendante.

Selon cette conception, les panneaux supérieurs de l'aile et du caisson central sont pris en sandwich entre les branches longitudinales des éléments de jonction croix ou T et les raidisseurs, ces derniers étant eux mêmes fixés ensemble au travers des ferrures de compression. Les efforts de compression qu'exerce la voilure sur le caisson central étant majoritairement repris par l'élément en croix ou en T, les ferrures de compression, du fait de leur éloignement des panneaux, participent peu à la reprise de ces efforts.

Pour ce type de réalisation, la répartition des efforts sont de l'ordre de 75% dans l'élément de jonction de type croix et de 25 % dans les ferrures ce qui impose de dimensionner l'élément de jonction en croix ou en T de façon conséquente.

Dans le cas d'un aéronef comportant une voilure traditionnelle à panneaux métalliques et raidisseurs et un caisson central réalisé en matériaux composites, le raccordement de la voilure sur le caisson est complexe du fait que les caissons composites sont réalisés en utilisant des panneaux avec des raidisseurs composites intégrés avec un faible taux de raidissement et sans talon et qui donc ne peuvent donc être utilisés comme points de fixation des ferrures de compression.

En outre pour des aéronefs de grande envergure, le dimensionnement de l'élément de jonction réalisé par matriçage devient problématique, son poids devient trop important, la technologie employée atteint ses limites en terme de niveau de flux acceptable et sa fabrication devient malaisée.

La présente invention vise à réaliser des jonctions en double cisaillement entre des panneaux en matériaux composites, comme les panneaux de constitution d'un caisson central d'aéronef, une nervure du caisson central et un ou des éléments métalliques, tels que des raidisseurs et panneaux métalliques de voilure d'aéronef, et à permettre de mieux répartir les efforts entre l'élément de jonction en croix ou en T et entre les ferrures fixées sur la nervure inférieure ce qui a pour avantage de réduire la masse de l'élément en croix ou en T.

Pour ce faire la présente invention concerne principalement un dispositif d'éclissage, notamment d'éléments de structure composite avec des éléments de structure métallique d'un aéronef, comportant un élément de jonction pourvu d'un premier voile longitudinal apte à être fixé à un panneau métallique, solidaire d'un raidisseur comportant une âme verticale et au moins une semelle, d'un deuxième voile longitudinal apte à être fixé à un panneau composite, et d'une branche inférieure, à laquelle sont reliées les extrémités proximales desdits premier et deuxième voiles longitudinaux, caractérisé en ce qu'il comporte un premier élément de ferrure, pourvu d'un premier corps de ferrure de reprise d'effort sur ledit raidisseur et d'un premier talon, et, un second élément de ferrure pourvu d'un second corps de ferrure de reprise d'effort sur le panneau composite et d'un second talon, les talons des éléments de ferrures étant fixés à la branche inférieure, en regard l'un de l'autre, de part et d'autre de la branche inférieure.

Plus particulièrement, le premier corps de ferrure est fixé sur le raidisseur par une nervure éclissée sur l'âme verticale du raidisseur métallique.

Le dispositif est notamment tel que les premier et second corps de ferrure comportent des moyens de fixation aux raidisseur et panneau composite orientés selon des plans différents.

Le dispositif selon l'invention, permettant une position resserrée des éléments de ferrure vis à vis de l'élément de jonction, a pour avantage de permettre une meilleure reprise des efforts de compression transmis par le panneau métallique ou extrados de l'aile et par le panneau composite de la partie supérieure du caisson central à l'élément de jonction.

Il permet en outre de pallier à l'impossibilité de fixer des éléments de ferrure côté panneau composite, sur les raidisseurs de ce panneau et évite de devoir ajouter une pièce d'entretoise entre des éléments de ferrure et ce panneau..

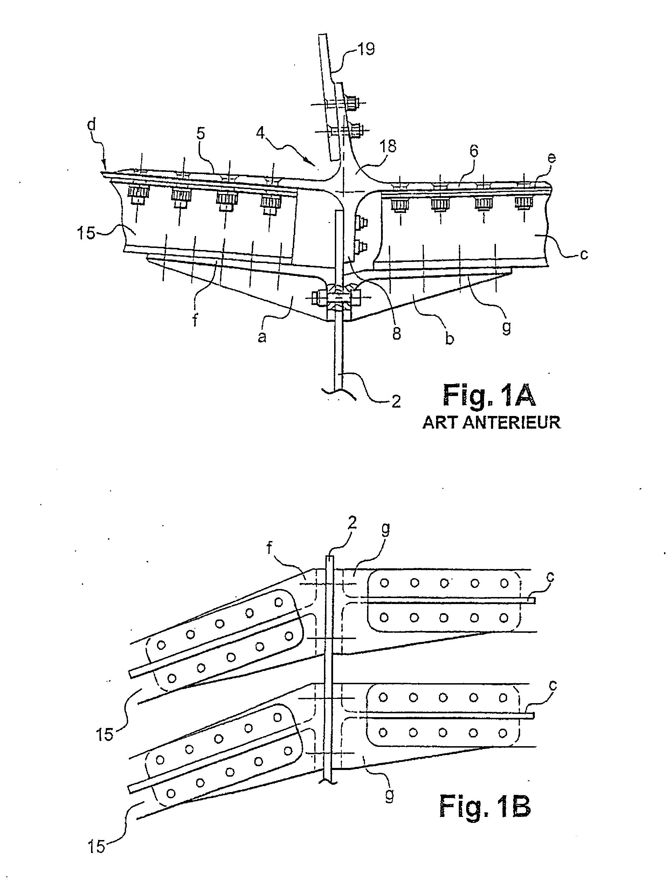

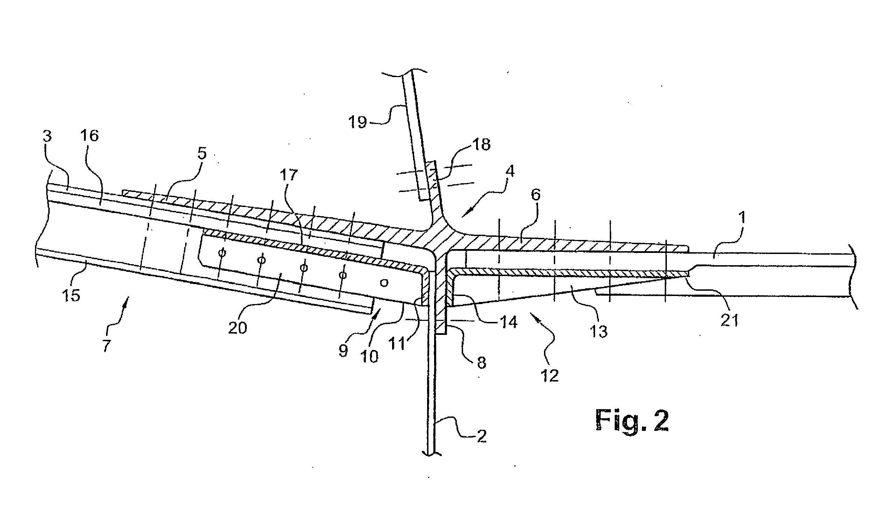

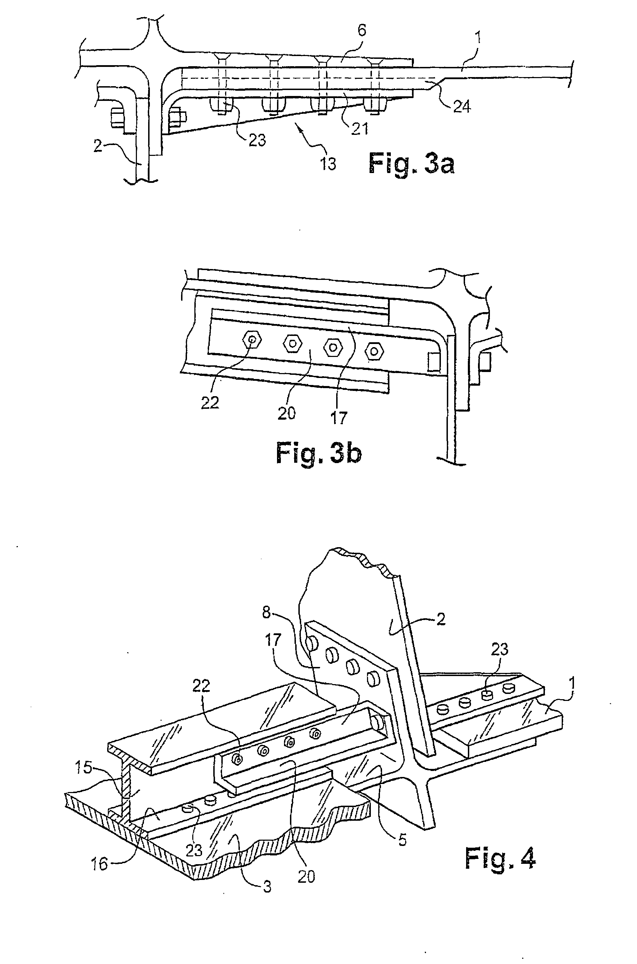

D'autres caractéristiques et avantages de l'invention ressortiront à la lecture de la description qui va suivre d'un exemple de réalisation non limitatif de l'invention en référence aux figures qui représentent:
En figures 1A et 1B: un exemple de réalisation d'un dispositif d'éclissage de l'art antérieur vu respectivement de côté et de dessous;
En figure 2: une vue de face d'un exemple de réalisation du dispositif selon l'invention;
En figure 3: un détail de la figure 2;
En figure 4: une vue en perspective de dessous du dispositif de la figure 2 côté panneau métallique;
Les figures 1A, vue de côté et 1B vue de dessous représentent un dispositif de l'art antérieur permettant la jonction des extrados des ailes d'un avion au caisson central du fuselage de cet avion sur lequel elles sont fixées. Ce dispositif comporte un élément de jonction 4 pourvu de voiles 5, 6, d'une branche inférieure 8 et d'une branche supérieure 18, les voiles 5, 6 étant boulonnés sur des panneaux métalliques d, e, la branche supérieure étant boulonnée sur une partie 19 du fuselage et la branche inférieure 8 étant boulonnée sur une nervure 2, élément de séparation du caisson central de l'aéronef.

Un tel dispositif se retrouve de chaque côté du caisson central pour la fixation des ailes de l'aéronef.

Ce dispositif comporte des éléments de ferrure a, b en équerre fixés par leur talon sur la nervure inférieure 2 et fixés chacun par leur toile f, g à la semelle inférieure de raidisseurs 15, c des panneaux d, e.

Selon cette configuration, de l'ordre de 75% des efforts de compression dus à la portance et transmis par les panneaux d des ailes et le panneau e du caisson central sont appliqués sur l'élément de jonction en forme de croix. Du fait de leur position au sommet du raidisseur, les éléments de ferrure reprennent seulement de l'ordre de 25% de ces efforts.

Pour un aéronef de masse importante et de grande envergure, le dimensionnement de l'élément de jonction réalisé par matriçage devient problématique pour des forts niveaux de flux, les capacités des pièces matricées étant limitées.

Le dispositif de la présente invention, représenté de face à la figure 2 et en perspective en vue de dessous à la figure 4, permet notamment de rééquilibrer les efforts de compression entre l'élément de jonction et les éléments de ferrure en rapprochant les éléments de ferrure de l'extrados de l'aile et de la paroi supérieure du caisson central.

Ce dispositif est particulièrement adapté au raccordement par éclissage d'éléments de structure composite, notamment le panneau supérieur 1 et la nervure 2 d'un caisson central, avec des éléments de structure métallique, en particulier un panneau supérieur 3 de l'aile de l'aéronef et une partie de fuselage 19.

Le panneau supérieur de l'aile est solidaire d'un ou plusieurs raidisseurs 7 dirigés vers le fuselage de l'aéronef et comportant une âme verticale 15 et au moins une semelle supérieure 16, sur laquelle repose le panneau 3.

Comme l'élément de jonction traditionnel, le dispositif selon l'invention comporte un élément de jonction 4, pourvu d'une branche inférieure 8, d'un premier voile longitudinal 5, qui repose sur le panneau métallique 3 et est fixé au panneau métallique 3, et d'un deuxième voile longitudinal 6 fixé à et reposant sur un panneau du caisson central, ici un panneau composite 1.

Les extrémités proximales desdits premier et deuxième voiles longitudinaux 5, 6 sont reliées à la branche inférieure 8 de l'élément de jonction.

Le dispositif selon l'invention comporte en outre un premier élément de ferrure 9, pourvu d'un premier corps de ferrure 10, de reprise d'effort sur ledit raidisseur 7, et d'un premier talon 11 et un second élément de ferrure 12, pourvu d'un second corps de ferrure 13, de reprise d'effort sur le panneau composite 1, et d'un second talon 14.

Les corps de ferrure comportent une toile 17, 21 et une nervure 20, 13 reliant la toile 17, 21 au talon 11, 14 des éléments de ferrure 9, 12.

Selon l'invention, les talons 11, 14 des éléments de ferrures sont fixés en regard l'un de l'autre à la branche inférieure 8 de l'élément de jonction 4, de part et d'autre de la branche inférieure 8.

Un premier avantage du dispositif selon l'invention est d'équilibrer les efforts sur la branche inférieure de la croix et de rapprocher les éléments de ferrure des voiles de la croix pour équilibrer les efforts appliqués sur la croix et les ferrures.

Comme représenté notamment en figure 3b, pour reprendre les efforts venant de l'aile, le premier corps de ferrure est fixé par sa nervure 20 sur l'âme verticale 15 du raidisseur 7 à l'aide de boulons 22.

Du côté caisson central, le second corps de ferrure 13 comporte une toile, 21, fixée sur une surface inférieure du panneau composite 1 comme représenté en figure 3a.

Ainsi, le premier voile longitudinal 5 est fixé sur la surface supérieure du panneau 3, le deuxième voile longitudinal 6 est fixé sur la surfaces supérieure du panneau composite 1, le premier élément de ferrure 9 sur l'âme du raidisseur 7 et le second élément de ferrure 12 sous le panneau composite 1, les premier et second corps de ferrure 10, 13 comportant des moyens de fixation 22, 23 aux dits raidisseur 7 et panneau composite 1 orientés selon des directions perpendiculaires, comme représenté en figure 4.

De plus, pour améliorer la fixation du panneau composite, le deuxième voile 6 et la toile 21 sont éclissés ensemble de chaque côté du panneau composite 1. Ainsi le panneau composite est pris en sandwich entre le deuxième voile 6 de l'élément de jonction et la toile 21 du second élément de ferrure.

Le panneau composite 1 comporte une sur-épaisseur 24 dans la zone de reprise d'effort entre le second élément de ferrure et la toile de l'élément de jonction, cette sur-épaisseur peut se trouver d'un côté ou de l'autre du panneau 1.

Comme dans le dispositif de l'art antérieur, la branche inférieure 8 de l'élément de jonction 4 reçoit une nervure inférieure 2 d'un caisson central de l'aéronef. Toutefois, selon l'invention et en référence à la figure 3b, pour encore mieux reprendre les efforts au niveau de l'élément de jonction, les talons 11, 14 des éléments de ferrure 9, 12 sont boulonnés ensemble sur la nervure inférieure 2 et sur la branche inférieure 8, ces dernières étant ainsi serrées ensemble par les éléments de ferrure 9, 12.

L'élément de jonction 4 selon l'exemple est un élément en forme de croix et comporte une branche supérieure 18 sur laquelle est boulonné un panneau de fuselage 19 de l'aéronef ce qui permet de parfaire la liaison entre le caisson, le fuselage et les ailes.

Ainsi, les ferrures rapprochées des voiles de l'élément de jonction participent pour au moins 40% à la reprise des efforts de compression, le dispositif permettant ainsi la transmission de flux de compression de l'ordre de 1000 daN/mm, le dispositif ayant en outre un bilan de masse inférieur à un dispositif de même capacité et de conception antérieure.

L'ensemble des éclissages entre les éléments est réalisé par des boulonnages 21, 22 et 23.

L'invention ne se limite pas à l'exemple représenté et notamment celle-ci peut s'appliquer inversée au niveau de l'intrados des ailes.

## Revendications

1. - Dispositif d'éclissage d'éléments de structure composite (1, 2) avec des éléments de structure métallique (3, 19) d'un aéronef, comportant un élément de jonction (4) pourvu d'un premier voile longitudinal (5) apte à être fixé à un panneau métallique (3), solidaire d'un raidisseur (7) comportant une âme verticale (15) et au moins une semelle (16), d'un deuxième voile longitudinal (6) apte à être fixé à un panneau composite (1), et d'une branche inférieure (8) à laquelle sont reliées les extrémités proximales desdits premier et deuxième voiles longitudinaux (5, 6), **caractérisé en ce qu**'il comporte un premier élément de ferrure (9), pourvu d'un premier corps de ferrure (10), de reprise d'effort sur ledit raidisseur (7) et d'un premier talon (11) et un second élément de ferrure (12), pourvu d'un second corps de ferrure (13), de reprise d'effort sur le panneau composite (1), et d'un second talon (14), les talons (11, 14) des éléments de ferrures étant fixés à la branche inférieure, en regard l'un de l'autre, de part et d'autre de la branche inférieure (8).

2. - Dispositif d'éclissage selon la revendication 1 **caractérisé en ce que** les premier et second corps de ferrure (10, 13) comportent des moyens de fixation (22, 23) aux raidisseur métallique et panneau composite orientés suivant des plans différents.

3. - Dispositif d'éclissage selon la revendication 1 **caractérisé en ce que** le premier corps de ferrure est fixé sur le raidisseur (7) par une nervure (20) éclissée sur l'âme verticale (15) du raidisseur (7).

4. - Dispositif d'éclissage selon l'une quelconque des revendications 1 à 3 **caractérisé en ce que** le premier voile longitudinal (5) et le deuxième voile longitudinal (6) sont aptes à être fixés sur les surfaces supérieures desdits panneaux (1, 3).

5. - Dispositif d'éclissage selon l'une quelconque des revendications précédentes **caractérisé en ce que** le second corps de ferrure (13) comporte une toile (21) fixée sur une surface inférieure du panneau composite (1).

6. - Dispositif d'éclissage selon la revendication 5 **caractérisé en ce que** ledit deuxième voile (6) et la toile (21) sont aptes à être éclissés ensemble sur le panneau composite (1).

7. - Dispositif d'éclissage selon l'une quelconque des revendications précédentes **caractérisé en ce que** la branche inférieure (8) de l'élément de jonction (4) reçoit une nervure inférieure (2) d'un caisson central de l'aéronef et **en ce que** les talons (11, 14) des éléments de ferrure (9, 12) sont boulonnés sur la nervure inférieure (2) et la branche inférieure (8).

8. - Dispositif d'éclissage selon l'une quelconque des revendications précédentes **caractérisé en ce que** l'élément de jonction (4) est en forme de croix et comporte une branche supérieure (18) sur laquelle un panneau de fuselage (19) de l'aéronef peut être boulonné.

9. - Dispositif d'éclissage selon l'une quelconque des revendications précédentes **caractérisé en ce que** qu'il est adapté pour un panneau composite (1) comportant une sur-épaisseur dans la zone de reprise d'effort.

## Claims

1. A joining device for joining, in particular, composite structure elements with metallic structure elements (3, 19) of an aircraft, comprising a junction element (4), provided with a first longitudinal partition wall (5) adapted to be fastened to a metallic panel (3), integral with a stiffener (7), comprising a vertical core (15) and at least one baseplate (16), with a second longitudinal partition wall (6) adapted to be fastened to a composite panel (1), and with a lower branch (8) to which are connected the proximal extremities of the said first and second longitudinal partition walls (5, 6), **characterized in that** it comprises a first fitting element (9), provided with a first strain relief fitting body (10) on the said stiffener (7) and with a first heel and a second fitting element (12), provided with a second strain relief fitting body (13) on the composite panel (1), and with a second heel (14), the heels (11, 14) of the fitting elements being fastened to said lower branch (8), opposite each other, on both sides of said lower branch (8).

2. A joining device according to claim 1, **characterized in that** the first and second fitting bodies (10, 13) comprise means (22, 23) for fastening these to the metallic stiffener and composite panel oriented according to different planes.

3. A joining device according to claim 1, **characterized in that** the first fitting body is fastened onto the stiffener (7) by a rib joined to the vertical core (15) of the stiffener (7).

4. A joining device, according to any of claim 1 to 3, **characterized in that** the first longitudinal partition wall (5) and the second longitudinal wall (6) are adapted to be fastened onto the upper surfaces of the said panels (1, 3).

5. A joining device according to claim 1 ,**characterized in that** the second fitting body (13) comprises a web (21) fastened onto a lower surface of the composite panel (1).

6. A joining device, according to claim 5, **characterized in that** the said second partition wall (6) and the web (21) are joined together onto the composite panel (1).

7. A joining device, according to any one of the preceding claims, **characterized in that** the lower branch (8) of the junction element (4) receives a lower rib (2) of a central box of the aircraft, and **in that** the heels (11, 14) of the fitting elements (9, 12) are bolted onto the lower rib (2) and the lower branch (8).

8. A joining device, according to any one of the preceding claims, **characterized in that** the junction element (4) in the shape of a cross and comprises an upper branch (18) onto which a fuselage panel (19) of the aircraft may be bolted.

9. A joining device, according to any one of the preceding claims, **characterized in that** it is adapted to a composite panel (1) having an additional thickness in the strain relief area.

## Patentansprüche

1. Vorrichtung für eine Laschenverbindung von Verbundstrukturelementen (1, 2) mit Metallstrukturelementen (3, 19) eines Flugzeugs, die ein Verbindungselement (4) umfasst, das versehen ist mit einem ersten longitudinalen Flügel (5), der so beschaffen ist, dass er an einer metallischen Platte (3) befestigt werden kann, die mit einer Aussteifung (7) mit vertikalem Kern (15) und wenigstens einer Sohle (16) fest verbunden ist, mit einem zweiten longitudinalen Flügel (6), der so beschaffen ist, dass er an einer Verbundplatte (1) befestigt werden kann, und mit einem unteren Schenkel (8), mit dem die proximalen Enden des ersten und des zweiten longitudinalen Flügels (5, 6) verbunden sind, **dadurch gekennzeichnet, dass** sie ein erstes Beschlagelement (9), das mit einem Beschlagkörper (10) für die Aufnahme einer Kraft auf die Aussteifung (7) und mit einer ersten Nase (11) versehen ist, und ein zweites Beschlagelement (12), das mit einem zweiten Beschlagkörper (13) für die Aufnahme einer Kraft auf die Verbundplatte (1) und mit einer zweiten Nase (14) versehen ist, umfasst, wobei die Nasen (11, 14) der Beschlagelemente an dem unteren Schenkel einander gegenüber und beiderseits des unteren Schenkels (8) befestigt sind.

2. Laschenverbindungsvorrichtung nach Anspruch 1, **dadurch gekennzeichnet, dass** der erste und der zweite Beschlagkörper (10, 13) Mittel (22, 23) für die Befestigung an der metallischen Aussteifung bzw. an der Verbundplatte, die in unterschiedlichen Ebenen orientiert sind, umfassen.

3. Laschenverbindungsvorrichtung nach Anspruch 1, **dadurch gekennzeichnet, dass** der erste Beschlagkörper an der Aussteifung (7) durch einen Steg (20) befestigt ist, der an dem vertikalen Kern (15) der Aussteifung (7) verlascht ist.

4. Laschenverbindungsvorrichtung nach einem der Ansprüche 1 bis 3, **dadurch gekennzeichnet, dass** der erste longitudinale Flügel (5) und der zweite longitudinale Flügel (6) so beschaffen sind, dass sie an den oberen Oberflächen der Platten (1, 3) befestigt werden können.

5. Laschenverbindungsvorrichtung nach einem der vorhergehenden Ansprüche, **dadurch gekennzeichnet, dass** der zweite Beschlagkörper (13) einen Stoff (21) aufweist, der an einer unteren Oberfläche der Verbundplatte (1) befestigt ist.

6. Laschenverbindungsvorrichtung nach Anspruch 5, **dadurch gekennzeichnet, dass** der zweite Flügel (6) und der Stoff (21) so beschaffen sind, dass sie an der Verbundplatte (1) gemeinsam verlascht werden können.

7. Laschenverbindungsvorrichtung nach einem der vorhergehenden Ansprüche, **dadurch gekennzeichnet, dass** der untere Schenkel (8) des Verbindungselements (4) einen unteren Steg (2) eines zentralen Kastens des Flugzeugs aufnimmt und dass die Nasen (11, 14) der Beschlagelemente (9, 12) an dem unteren Steg (2) und dem unteren Schenkel (8) verbolzt sind.

8. Laschenverbindungsvorrichtung nach einem der vorhergehenden Ansprüche, **dadurch gekennzeichnet, dass** das Verbindungselement (4) kreuzförmig ist und einen oberen Schenkel (18) aufweist, an dem eine Rumpfplatte (19) des Flugzeugs verbolzt werden kann.

9. Laschenverbindungsvorrichtung nach einem der vorhergehenden Ansprüche, **dadurch gekennzeichnet, dass** sie für eine Verbundplatte (1) geeignet ist, die in der Kraftaufnahmezone eine Überdicke aufweist.
